# FASCICULE DE BREVET EUROPEEN

(11) **EP 4 075 026 B1**
(45) Date de publication et mention de la délivrance du brevet: **09.04.2025**
(21) Numéro de dépôt: 22167542.4
(22) Date de dépôt: 11.04.2022
(51) Int. Cl.: F16H 61/00, F16H 61/32, F16H 63/30, H02K 5/00, H02K 7/116, H01R 13/00, F16H 57/031

(54) **ACTIONNEUR POUR L'ACTIONNEMENT D'AU MOINS UN ORGANE MOBILE, NOTAMMENT POUR LE CHANGEMENT DE RAPPORTS D'UNE TRANSMISSION DE VÉHICULE AUTOMOBILE**
STELLGLIED ZUM BETÄTIGEN MINDESTENS EINES BEWEGLICHEN ORGANS, INSBESONDERE FÜR DEN GANGWECHSEL KRAFTFAHRZEUGGETRIEBES
ACTUATOR FOR ACTUATING AT LEAST ONE MOVABLE MEMBER, IN PARTICULAR FOR THE SHIFTING OF GEARS IN A TRANSMISSION OF A MOTOR VEHICLE

(30) Priorité: 13.04.2021 FR 2103790
(43) Date de publication de la demande: 19.10.2022
(73) Titulaire: Valeo Electrification, 95800 Cergy (FR)
(72) Inventeur: GAUTIER, Sylvain, 95892 Cergy Pontoise (FR); GILET, Dominique, 95892 Cergy Pontoise (FR); BAZIN, Vincent, 95892 Cergy Pontoise (FR)
(74) Mandataire: Valeo Powertrain Systems

(56) Documents cités:
- EP-B1- 1 094 253
- CN-U- 210 397 685
- US-A- 6 113 407
- US-A1- 2011 126 657
- US-A1- 2019 107 197

## Description

L'invention concerne un actionneur pour l'actionnement d'au moins un organe mobile. Elle trouve son application, notamment dans le domaine des actionneurs pour les transmissions de véhicule automobiles. De nombreuses autres applications sont cependant possibles.

Plus précisément, l'invention concerne un actionneur pour le changement de rapports d'une transmission ou boite de vitesses de véhicule automobile. Un tel actionneur trouve son utilité dans une transmission hybride de véhicule automobile, comportant d'une part un moteur thermique d'entrainement, et d'autre part une machine électrique.

Il existe un besoin de changer les rapports de la transmission afin que le moteur thermique et/ou la machine électrique fonctionnent dans leur plage d'utilisation optimale. L'actionneur selon l'invention remplit cette fonction.

Il est connu du document WO2018/146393A1 un actionneur pour le changement de rapports d'une boite de vitesses comprenant un moteur électrique et un axe de fourchette déplacé axialement pour engager ou désengager un rapport de la boite de vitesses. Cet actionneur comporte des moyens de démultiplication de mouvement de rotation entre l'arbre de sortie du moteur électrique et un pion déporté par rapport à l'axe de rotation du moteur électrique, le pion étant engagé dans une ouverture oblongue d'un système à crabot, de manière à provoquer le déplacement axial de l'axe de fourchette en débattant linéairement le long de l'ouverture sous l'action du moteur électrique. EP1094253 B1 divulgue aussi un actionneur avec un système de démultiplication.

Cette solution a l'inconvénient de proposer un moyen de démultiplication volumineux, ce qui va à l'encontre des objectifs de l'industrie automobile visant à réduire le poids et l'encombrement des composants. De plus, aucun moyen de pilotage du moteur électrique n'est proposé par ce document.

La présente invention a pour objet une amélioration des solutions actuelles, notamment en proposant une solution ayant pour but de rendre le plus compact possible un tel actionneur pour le changement de rapports d'une transmission de véhicule automobile, tout en intégrant un moyen de pilotage du moteur électrique.

Le terme transmission est synonyme de boite de vitesses d'un véhicule automobile.

Plus particulièrement, l'invention concerne un actionneur pour l'actionnement d'au moins un organe mobile d'une transmission de véhicule automobile, ledit actionneur comprenant un boitier et un couvercle définissant un volume interne dans lequel sont logés au moins un moteur électrique ayant un stator et un rotor monté sur un arbre de rotor s'étendant selon un axe X1, un pignon moteur fixé à l'extrémité de l'arbre opposée au rotor, une carte électronique pour l'alimentation du stator et le pilotage du moteur électrique, un mécanisme de démultiplication entrainé par le pignon moteur, le boitier ou le couvercle comprend un connecteur électrique qui intègre une membrane semi-perméable permettant un échange gazeux entre l'intérieur de l'actionneur et l'environnement extérieur.

Ainsi, un actionneur selon l'invention pourra résoudre les problèmes exposés ci-dessus. En particulier, positionner la membrane sur le connecteur électrique permet de simplifier la conception du boitier ou du couvercle.

Selon l'invention, la membrane est semi-perméable, c'est-à-dire qu'elle est perméable aux gaz, notamment l'air et imperméable aux liquides, notamment l'eau ou l'huile. Cet échange permet d'équilibrer la pression à l'intérieur de l'actionneur du fait du dégagement de chaleur lié à la carte électronique et au moteur électrique.

Selon une caractéristique de l'invention, le boitier et le couvercle sont réalisés en métal. De préférence, le boitier et le couvercle sont en aluminium, par exemple en aluminium coulé sous haute pression.

Selon une autre caractéristique de l'invention, le connecteur électrique est réalisé en plastique. Il est particulièrement intéressant de positionner la membrane sur un élément en plastique. De plus, positionner la membrane sur le connecteur électrique en plastique est plus simple du point de vue de la fabrication plutôt que positionner la membrane sur le boitier ou le couvercle en métal. En effet, il est plus facile sur une pièce en plastique de créer des formes complexes permettant de maintenir la membrane, ce qui est impossible avec une pièce métallique. Ces formes complexes peuvent par exemple protéger l'accès à la membrane.

Dans le domaine des actionneurs automobile, il est intéressant d'utiliser des éléments standardisés afin de réduire les coûts, l'utilisation d'un connecteur électrique intégrant une membrane permet également son utilisation dans différents types d'actionneurs.

De préférence, le connecteur électrique avec sa membrane est positionné sur l'élément support, à savoir le couvercle ou le boitier, qui se trouve sur la partie supérieure de l'actionneur.

Selon un exemple de réalisation de l'invention, la membrane est clippé sur le connecteur électrique par l'intermédiaire d'une bague. De manière alternative, la membrane est collée ou soudée sur le connecteur électrique.

De préférence, le connecteur électrique est de forme sensiblement circulaire. Un joint est positionné entre le connecteur électrique et le boitier ou le couvercle, de préférence le joint est un joint torique.

Selon l'invention, le connecteur électrique est vissé sur le boitier ou le couvercle. En variante, le connecteur électrique est clippé sur le boitier ou le couvercle.

Selon une caractéristique de l'invention, le boitier et le couvercle présentent chacun des moyens de guidage du mécanisme de démultiplication.

Selon l'invention, le boitier comprend une gorge périphérique dans laquelle un joint d'étanchéité est disposé afin d'assurer une étanchéité entre le boitier et le couvercle.

Préférentiellement, l'actionneur est apte à être fixé directement sur la transmission du véhicule et la surface externe du couvercle présente une gorge dans laquelle est positionnée un joint d'étanchéité afin d'assurer l'étanchéité entre la transmission et le couvercle de l'actionneur.

De manière avantageuse, l'actionneur comprend au moins un pion apte à être engagé dans un organe mobile de la transmission. Le pion est situé à l'extérieur du couvercle et de ce fait à l'extérieur de l'actionneur. Le pion peut présenter une forme coopérant avec l'organe mobile, par exemple une forme conique ou en variante une forme sphérique.

Le pion est apte à être engagé dans une ouverture, par exemple une ouverture oblongue, de manière à provoquer le déplacement axial d'une fourchette en débattant linéairement le long de l'ouverture sous l'action du moteur électrique. Le pion est apte à débattre dans l'ouverture autour d'une position centrale de point mort et deux positions extrêmes.

Selon l'invention, le mécanisme de démultiplication est situé cinématiquement entre le pignon moteur et le pion. Le mécanisme de démultiplication comprend au moins une roue dentée montée sur au moins un arbre. Plus précisément, le mécanisme de démultiplication comprend une roue à pignons étagés et un pignon à secteur denté.

Selon l'invention, la roue à pignons étagés et le pignon à secteur denté s'étendent chacun selon un plan orthogonal à l'axe X1. Cette architecture de mécanisme de démultiplication permet d'obtenir un actionneur particulièrement compact.

De manière plus précise, la roue à pignons étagés comprend un premier pignon et un deuxième pignon, le premier pignon est couplé avec le pignon moteur et le deuxième pignon est couplé avec le pignon à secteur denté, la roue à pignons étagés est montée sur un arbre s'étendant selon un axe X2 décalé radialement par rapport à l'axe X1 de l'arbre du moteur électrique. De préférence, la roue à pignons étagés est monobloc, le premier pignon et le deuxième pignon sont coaxiaux.

Selon l'invention, le secteur denté du pignon s'étend dans une plage angulaire comprise entre 90° et 180°, de préférence entre 100° et 120°. En variante, le secteur denté du pignon peut s'étendre à 360°. Le pignon à secteur denté est monté sur un arbre s'étendant selon un axe X3 décalé radialement par rapport aux axes X1 et X2.

Selon une caractéristique additionnelle de l'invention, le pion est monté déporté selon un axe X4 à une extrémité de l'arbre du pignon à secteur denté par l'intermédiaire d'une bielle.

Selon l'invention, les axes X1, X2, X3 et X4 sont parallèles.

Selon une caractéristique de l'invention, l'actionneur est configuré pour le changement de rapports d'une transmission de véhicule automobile, notamment une transmission hybride.

Avantageusement, l'actionneur selon l'invention comprend trois moteurs électriques, chaque moteur électrique étant associé à son propre mécanisme de démultiplication et son propre pion. De cette manière, l'actionneur est apte à piloter le changement de six rapports de transmission. En effet, chaque moteur électrique, via son propre mécanisme de démultiplication est apte à déplacer le pion associé dans deux positions extrêmes correspondant chacune à un rapport de la transmission. En d'autres termes, chaque moteur électrique, via son propre mécanisme de démultiplication et son pion associé est apte à piloter deux rapports de la transmission du véhicule. L'actionneur électrique selon l'invention avec ses trois moteurs électriques trouve un intérêt dans les transmissions à six rapports.

Par exemple, dans le contexte de la transmission hybride divulguée dans les documents WO2015/197927A1 et WO2019/219294A1, le premier moteur électrique de l'actionneur selon l'invention peut être lié à deux rapports associés de la machine électrique tandis que le second moteur électrique de l'actionneur selon l'invention peut être lié à deux rapports du moteur thermique, par exemple les rapports 1 et 3 et le troisième moteur électrique de l'actionneur selon l'invention peut être lié à deux autres rapports du moteur thermique, par exemple les rapports 2 et 4.

D'autres caractéristiques et avantages de l'invention ressortiront à la lecture qui suit d'exemples de réalisations détaillés, en référence aux Figures annexées.
La Figure 1 représente l'actionneur selon l'invention depuis une vue de dessous ;
La Figure 2 représente l'actionneur selon l'invention depuis une vue de dessus ;
La Figure 3 représente une vue en perspective et en coupe partielle de l'actionneur selon l'invention ;
La Figure 4 représente une vue en coupe et en perspective de l'actionneur selon l'invention ;
La Figure 5a et la Figure 5b représentent respectivement une vue en perspective et une vue en coupe d'un moyen de guidage d'un arbre du mécanisme de démultiplication ;
La Figure 6 représente une vue en perspective du contact entre la carte électronique et le boitier ;
La Figure 7 représente une vue en perspective coupée d'une plaque de maintien d'un moteur électrique ;
La Figure 8 représente une vue en coupe d'un moyen de guidage d'un arbre du mécanisme de démultiplication ;
La Figure 9a et la Figure 9b représentent respectivement une vue en perspective et une vue en coupe d'un connecteur électrique de l'actionneur selon l'invention ;
La Figure 10 représente une vue en coupe de l'actionneur électrique selon l'invention fixé sur une boite de vitesses d'un véhicule automobile ;
La Figure 11 représente un mode de réalisation alternatif de l'invention ;
La Figure 12 et la Figure 13 représentent une variante de réalisation de l'actionneur selon l'invention ;
La Figure 14 et la Figure 15 représentent une autre variante de réalisation de l'actionneur selon l'invention.

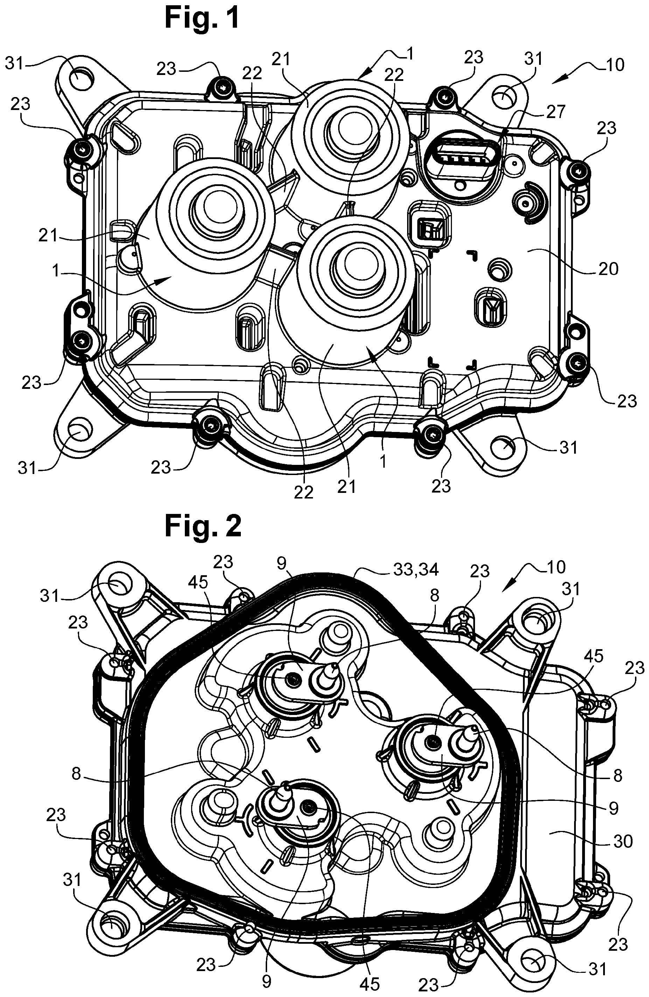

La Figure 1 représente un actionneur 10 selon l'invention. L'actionneur 10 est formé par deux parties principales, à savoir un boitier 20 et un couvercle 30 dans lesquels viennent se loger plusieurs éléments. Cette Figure 1 est focalisée sur le boitier 20 de l'actionneur 10. Le boitier 20 est réalisé en métal comme par exemple en aluminium ou en alliage d'aluminium. En variante, le boitier 20 peut être réalisé dans une matière plastique injectable. Le boitier 20 a pour fonction d'accueillir les moteurs électriques 1 dans des logements dédiés 21. Le boitier 20 forme ainsi un boitier commun aux moteurs électriques 1.

Dans un premier mode de réalisation de l'invention, trois moteurs électriques 1 sont logés dans trois logements respectifs 21. Les logements 21 des moteurs électriques 1 sont réalisés de forme complémentaire à la forme des moteurs électriques. Des renforts 22 sous forme de nervures sont prévus entre chaque logement 21 pour rigidifier le boitier 20.

Le boitier 20 intègre également un connecteur électrique 27 afin d'alimenter les moteurs électriques 1 et tous les composants électriques nécessaires au fonctionnement de l'actionneur 10.

Le boitier 20 est assemblé au couvercle 30 par l'intermédiaire de vis de fixation 23 situées au niveau du pourtour du boitier 20 et du couvercle 30.

En Figure 2 est visible le couvercle 30 de l'actionneur 10. Le couvercle 30 est réalisé en métal comme par exemple en aluminium ou en alliage. En variante, le couvercle 30 peut être réalisé dans une matière plastique injectable. Dans le cas de la présente invention, le boitier 20 et le couvercle 30 sont réalisés en aluminium coulé sous haute pression (en anglais « *die casting »).* Le boitier 20 ou le couvercle 30 peut recevoir un circuit de refroidissement si les températures environnantes sont trop élevées.

L'actionneur 10 est apte à être fixé directement sur la transmission du véhicule, comme par exemple la boite de vitesses, par l'intermédiaire de moyens de fixation 31, notamment des ouvertures dans lesquels passent des vis. La surface externe du couvercle 30 présente une gorge 33 dans laquelle est positionnée un joint d'étanchéité 34 afin d'assurer l'étanchéité entre la transmission et le couvercle 30. Les éléments qui se trouvent à l'intérieur du contour fermé du joint 34 sont directement en contact avec la transmission du véhicule. Dans le cas présent trois pions 8 sont aptes à être chacun engagés dans un organe mobile de la transmission, lié par exemple à une fourchette et/ou un crabot. Les pions 8 sont donc situés à l'extérieur du couvercle 30. Les pions 8 ont une forme coopérant avec leur organe mobile respectif, par exemple une forme conique.

Chaque pion 8 est apte à être engagé dans une ouverture, par exemple une ouverture oblongue, d'un crabot de manière à provoquer le déplacement axial d'une fourchette en débattant linéairement le long de l'ouverture sous l'action du moteur électrique. Le pion est apte à débattre dans l'ouverture autour d'une position centrale de point mort et deux positions extrêmes. Cette cinématique d'actionnement est décrite dans le document publié WO2018/146393A1.

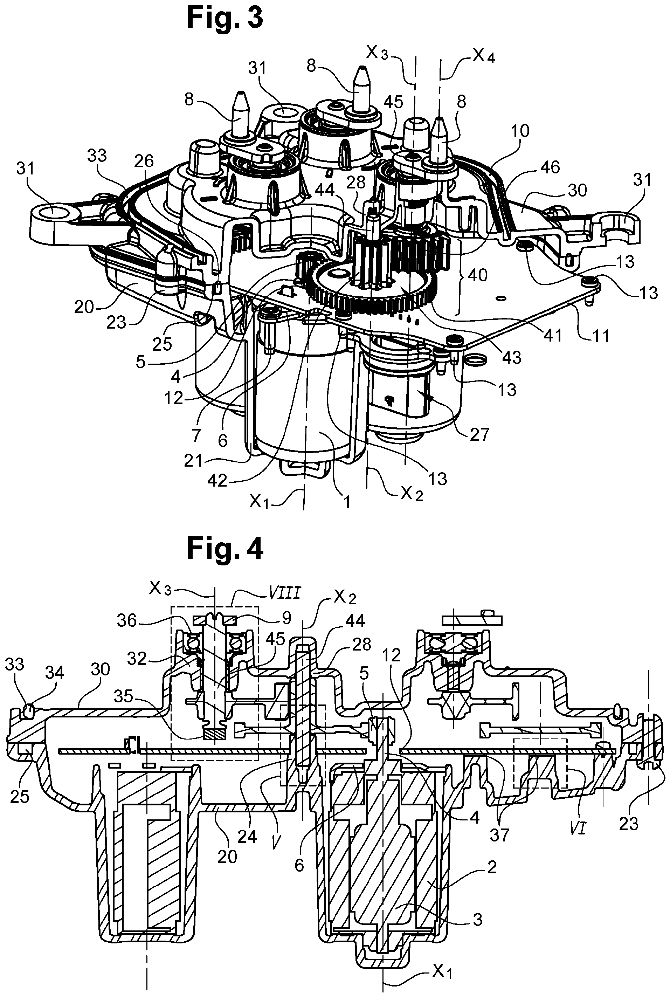

La Figure 3 montre l'intérieur de l'actionneur 10 selon l'invention. Bien que cette Figure 3 soit une vue en perspective et en coupe partielle focalisée sur un seul moteur électrique 1 et sa cinématique associée jusqu'au pion 8, les trois moteurs électriques 1 et les cinématiques d'actionnement des pions 8 sont toutes indépendantes mais identiques dans l'actionneur 10.

Sur cette Figure 3 est donc visible le boitier 20 et son logement 21 dans lequel sont logés les moteurs électriques 1. Afin de maintenir fixement les moteurs électriques 1 dans le boitier 20, des plaques de maintien 6 sont utilisées de manière à plaquer les moteurs électriques 1 au fond de leur logement 21 respectif.

Les moteurs électriques 1 sont à courant continu et sont chacun constitués d'un stator 2 et un rotor 3 monté sur un arbre de rotor 4 s'étendant selon un axe X1. Un pignon moteur 5 est fixé à l'extrémité de chaque arbre du côté opposé au rotor 3 et permet d'entrainer un mécanisme de démultiplication 40 formé par des roues dentées 41, 42, 46 montées sur des arbres 44, 45.

Le mécanisme de démultiplication 40 est situé cinématiquement entre le pignon moteur 5 et le pion 8 et comprend une roue à pignons étagés 43 et un pignon à secteur denté 46.

La roue à pignons étagés 43 comprend un premier pignon 41 et un deuxième pignon 42, le premier pignon 41 est couplé avec le pignon moteur 5 et le deuxième pignon 42 est couplé avec le pignon à secteur denté 46, la roue à pignons étagés 43 est montée sur l'arbre 44 s'étendant selon un axe X2 et décalé radialement par rapport à l'axe X1 de l'arbre 4 du moteur électrique 1. Le premier pignon 41 a un diamètre plus grand que le deuxième pignon 42. Les roues dentées 41, 42, 46 sont surmoulées sur les arbres 44, 45. Les roues dentées 41, 42, 46 sont par exemple en polyphtalamide renforcé de fibres de verre (PPA), présentant une rigidité et une résistance très élevées, ainsi qu'une résistance aux hautes températures et aux produits chimiques. En variante, les roues dentées peuvent être en polyamide renforcé de fibres de verre (PA).

La roue à pignons étagés 41, 42, 43 et le pignon à secteur denté 46 s'étendent chacun selon un plan orthogonal à l'axe X1.

Le secteur denté du pignon 46 s'étend dans une plage angulaire comprise entre 90° et 180°, de préférence entre 100° et 120°. Le pignon à secteur denté 46 est monté sur l'arbre 45 s'étendant selon un axe X3 décalé radialement par rapport aux axes X1 et X2. Le pion 8 est monté déporté selon un axe X4 à une extrémité de l'arbre 45 du pignon à secteur denté 46 par l'intermédiaire d'une bielle 9. Cette bielle 9 est également située à l'extérieur du couvercle 30. Les axes X1, X2, X3 et X4 sont parallèles.

Une carte électronique 11 servant à l'alimentation du stator 2 et au pilotage de chaque moteur électrique 1 est situé axialement selon l'axe X1 entre chaque moteur électrique 1 et chaque pignon moteur 5. Le boitier 20 définit un premier volume dans lequel sont logés les moteurs électriques 1 et la carte électronique 11 formant ainsi un sous-ensemble électronique.

La carte électronique 11 est fixée au boitier 20 par l'intermédiaire de moyens de fixation 13, notamment des vis. Le contour extérieur de la carte électronique 11 épouse sensiblement le contour intérieur du boitier 20. La carte électronique 11 comporte trois ouvertures 12 de contour fermé qui sont chacune traversées par l'arbre 4 de rotor de chaque moteur électrique 1.

La carte électronique 11 permet la gestion de l'électronique de puissance, de l'électronique de commande et de la fonction autodiagnostic. Par conséquent, toutes les fonctions (détection de la position des pions 8 pour un contrôle en boucle fermée, alimentation électrique et connexion au bus du véhicule) peuvent se trouver sur la carte électronique. Ainsi, le circuit électronique 11 intègre tous les composants électroniques nécessaires au fonctionnement de l'actionneur électrique comme par exemple des capteurs 56 de rotation en vis-à-vis des arbres 45 afin de connaitre la position des pions 8. De plus, l'alimentation électrique des moteurs 1 est à proximité du connecteur électrique 27. La carte électronique 11 est relié aux moteurs électriques 1 par des contacts à sertir ou à souder.

Le mécanisme de démultiplication 40 est logé dans le couvercle 30 qui définit un second volume. Le boitier 20 et le couvercle 30 présentent chacun des moyens de guidage 24, 32 des arbres 44, 45 du mécanisme de démultiplication 40.

Le boitier 20 comprend une gorge périphérique 25 dans laquelle un joint d'étanchéité 26 est disposé afin d'assurer une étanchéité entre le boitier 20 et le couvercle 30.

La Figure 4 permet de mieux illustrer la cinématique entre le moteur électrique 1, le mécanisme de démultiplication 40 et le pion 8.

Le boitier 20 comporte un moyen de guidage 24 sous forme de trou borgne recevant une extrémité de l'arbre 44 de la roue à pignons étagés 43. Le couvercle 30 comporte également un moyen de guidage 28 sous forme de trou borgne recevant l'autre extrémité de l'arbre 44 de la roue à pignons étagés 43.

Le couvercle 30 comprend également un trou débouchant 32 pour le passage et le guidage de l'arbre 45 du pignon à secteur denté 46.

Sur son extrémité faisant face à la carte électronique 11, l'arbre 45 comprend un aimant 35 permettant de détecter la position du pion 8 grâce à un capteur 56 fixé sur la carte électronique 11. Le capteur 56 est de préférence un capteur à effet Hall.

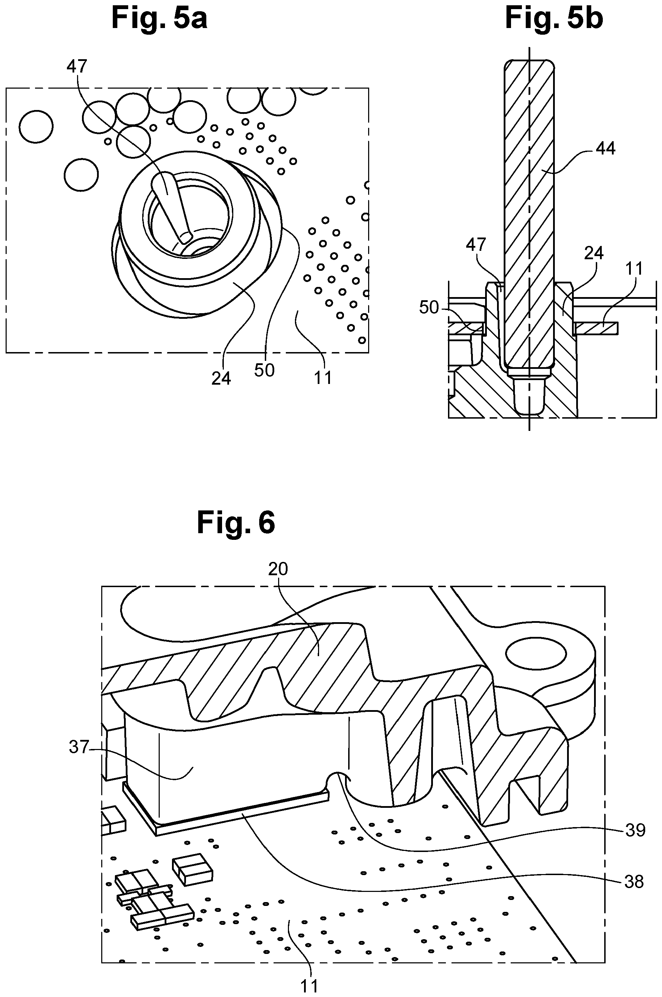

Les Figures 5a et 5b montrent respectivement une vue en perspective et une vue en coupe du moyen de guidage 24 dans lequel vient se loger l'arbre 44 du mécanisme de démultiplication 40. Le moyen de guidage comporte une rainure axiale 47 permettant de faciliter l'insertion de l'arbre 44. Cette rainure axiale 47 permet de chasser l'air tout en empêchant la formation d'une poche d'air lors de l'insertion de l'arbre 44 dans le moyen de guidage 24. Le moyen de guidage 28 peut également comporter une telle rainure axiale. La carte électronique possède une ouverture 50 de contour fermé traversée par le moyen de guidage 24. Le moyen de guidage 24 possède un épaulement 55 sur lequel vient s'appuyer la carte électronique. Le moyen de guidage 24 sert à la fois pour le guidage en rotation du mécanisme de démultiplication 40 mais également de moyen de centrage de la carte électronique 11 dans le boitier 20.

La Figure 6 montre la carte électronique 11 en contact avec des pions 37 du boitier 20 afin de dissiper la chaleur produite par la carte électronique 11. De le pâte thermique 38 est positionnée entre les pions 37 et la carte électronique 11 afin d'améliorer le transfert de calories depuis la carte électronique 11 vers le boitier 20 qui, grâce à sa matière, dissipe la chaleur. Une goulotte 39 est prévue sur le pourtour des pions 37 afin de récupérer le surplus de pâte thermique 38.

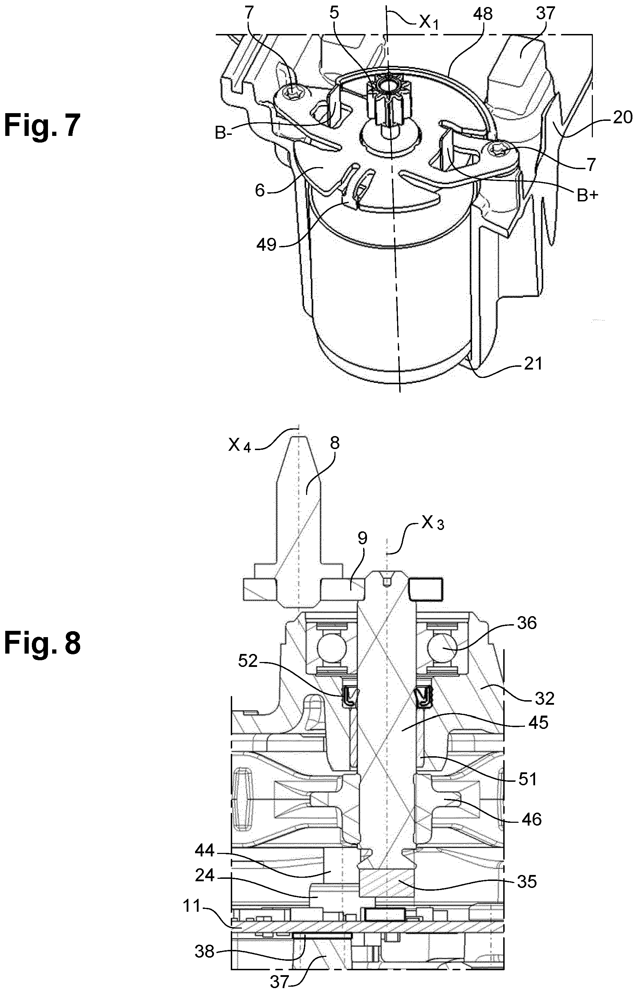

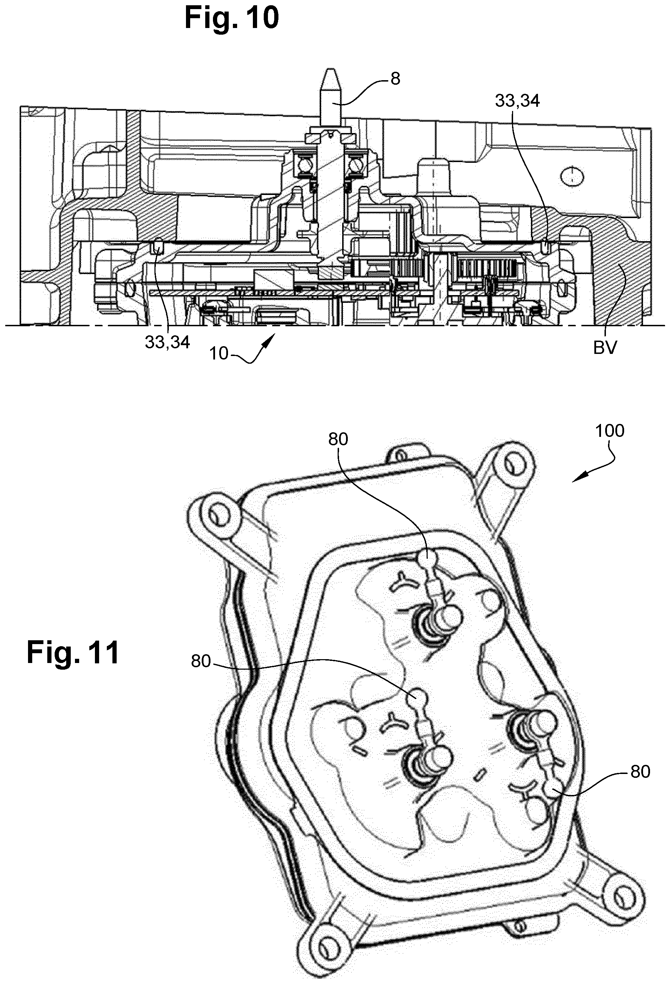

La Figure 7 montre le positionnement d'un des moteurs électriques 1 et son maintien en position dans son logement 21 dédié. En fonctionnement, le moteur électrique 1 subit une accélération et une inertie, il faut donc qu'il soit correctement positionné et maintenu dans son logement 21. Le moteur électrique 1 doit également être correctement orienté pour permettre la conduction via ses bornes B+, B- avec la carte électronique 11 et ainsi éviter un risque d'inversion de polarité. Les bornes B+, B- sont en contact avec la carte électronique 11 par pincement notamment visible sur la Figure 10. Le moteur électrique 1 doit aussi être correctement centré pour assurer le bon fonctionnement du mécanisme de démultiplication 40. La plaque de maintien 6 réalise toutes ces fonctions. Cette plaque de maintien 6 permet de plaquer le moteur électrique 1 au fond du logement 21. La plaque de maintien 6 est réalisée en métal, de préférence dans un métal permettant une fonction de ressort. La plaque de maintien 6 est fixée au boitier 20 par l'intermédiaire de moyens de fixation 7, notamment des vis. Le boitier 20 comprend une nervure 48 en forme d'arc de cercle réalisée afin de centrer la plaque de maintien 6 par rapport au boitier 20, la plaque de maintien 6 ayant une forme sensiblement complémentaire à la nervure 48. La plaque de maintien 6 comprend également une patte courbée 49 afin d'indexer la plaque de maintien 6 et le moteur électrique 1, la patte courbée 49 étant dirigées vers le moteur électrique 1.

La Figure 8 montre plus en détails le guidage de l'arbre 45. En raison des efforts et des couples élevés pour contrôler le changement des rapports de la transmission, le guidage de l'arbre 45 doit être robuste. Pour se faire, l'arbre 45 est guidé en rotation par un roulement 36 et un palier 51, ce qui permet d'absorber les charges radiales. Le roulement 36 est un roulement à billes et le palier 51 est un palier lisse.

Le moyen de guidage 32 est un trou débouchant et possède trois alésages de diamètres différents dans lesquels le roulement 36, le palier 51 et un joint à lèvres 52 sont montés.

Le roulement 36 est monté dans un premier alésage afin de guider en rotation l'arbre 45 du pignon à secteur denté 46 et le pion 8 monté sur la bielle 9. Le roulement 36 est de préférence étanche afin de ne pas laisser entrer d'impureté dans la volume interne défini par le boitier 20 et le couvercle 30. La bague interne du roulement à billes 36 est montée sur l'arbre 45 et la bague externe est logée dans un premier alésage du moyen de guidage 32.

La paroi interne du palier 51 est en contact avec l'arbre 45 et la paroi externe est en contact avec un deuxième alésage du moyen de guidage 32. Le palier 51 est par exemple un palier lisse antifriction réalisé en métal-polymère. En variante, le palier lisse peut être réalisé en bronze.

Le roulement 36 se trouve du côté externe du couvercle 30 et le palier 51 se trouve du côté interne du couvercle 30.

Axialement selon l'axe X3, un joint à lèvre 52 est positionné dans un troisième alésage du moyen de guidage 32 entre le roulement à billes 36 et le palier 51. Ce joint à lèvre 52 permet de rendre étanche l'intérieur de l'actionneur. En effet, l'actionneur 10 est monté directement sur la boite de vitesses du véhicule, ainsi le pion 8, la bielle 9 et le roulement à billes 36 sont en contact direct avec le lubrifiant de la boite de vitesses. Le roulement à billes 36 est ainsi constamment lubrifié par le lubrifiant de la boite de vitesse. Autrement dit, le joint à lèvres 52 permet de séparer un espace humide, à savoir l'intérieur de la boite de vitesses du véhicule, et un espace sec, à savoir l'intérieur de l'actionneur 10. Le joint à lèvres 52 est logé dans un épaulement du moyen de guidage 32. La lèvre du joint 52 est en contact avec l'arbre 45. Le joint à lèvres 52 est en contact avec une extrémité du palier 51.

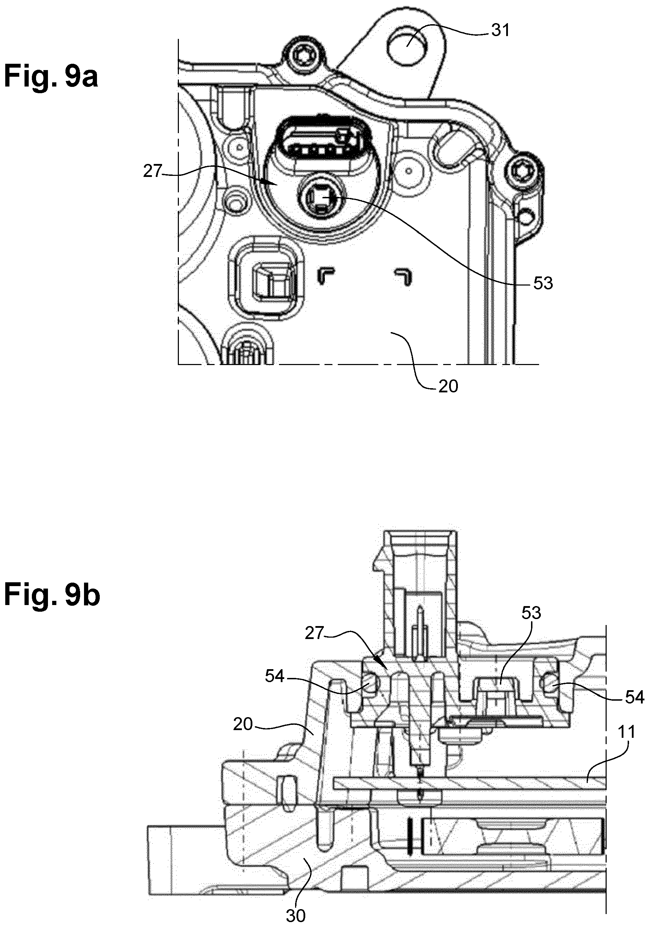

Les Figures 9a et 9b montrent en détail le connecteur électrique 27 permettant d'alimenter les moteurs électriques 1 et tous les composants électriques nécessaires au fonctionnement de l'actionneur 10. Du coté externe au boitier 20, le connecteur électrique 27 comprend des pistes électriques aptes à êtres raccordées à un connecteur externe. Du coté interne au boitier 20, le connecteur électrique comprend des moyens de connexion à la carte électronique 11. Le connecteur électrique 27 est entièrement réalisé en plastique et vient se monter dans une ouverture du boitier 20. Le connecteur électrique 27 comprend une membrane 53, plus précisément une membrane semi-perméable, c'est-à-dire qu'elle est perméable aux gaz, notamment l'air et imperméable aux liquides, notamment l'eau. La membrane 53 est hydrophobe et le cas échéant oléophobe, et peut présenter un revêtement microporeux. La membrane 53 peut être fixée par différents moyens sur le connecteur électrique 27, comme par l'intermédiaire d'une bague clippée sur le connecteur électrique 27. Alternativement, la membrane 53 peut être collée ou soudée sur le connecteur électrique. Une telle membrane permet ainsi de limiter les risques de condensation et d'excès de pression au sein de l'actionneur 10, et augmente ainsi la durée de vie tout en améliorant le fonctionnement de l'actionneur.

Un joint 54 visible sur la Figure 9b, de type torique, est positionné entre le connecteur électrique 27 et le boitier 20 afin de garantir l'étanchéité de l'actionneur. Le joint 54 est reçu dans une gorge annulaire du connecteur électrique 27. Le connecteur électrique 27 est vissé ou clippé sur le boitier 20.

La Figure 10 montre l'actionneur 10 en position montée sur la boite de vitesses BV du véhicule. L'étanchéité entre la boite de vitesse BV et l'actionneur 10 est réalisée par le joint 34 en monté dans une gorge 33 de l'actionneur 10, plus précisément du couvercle 30. Le joint 34 est de préférence un joint en polymère. L'utilisation d'un joint 34 en polymère est préféré à l'utilisation d'un joint plat en métal comme il est d'usage dans le domaine.

La Figure 11 montre une variante de réalisation de l'actionneur 10. A la différence du mode de réalisation précédent le pion 80 est sphérique et non plus conique. Ceci permet de s'adapter à une plus grande diversité d'organes mobiles de transmissions de véhicules automobile.

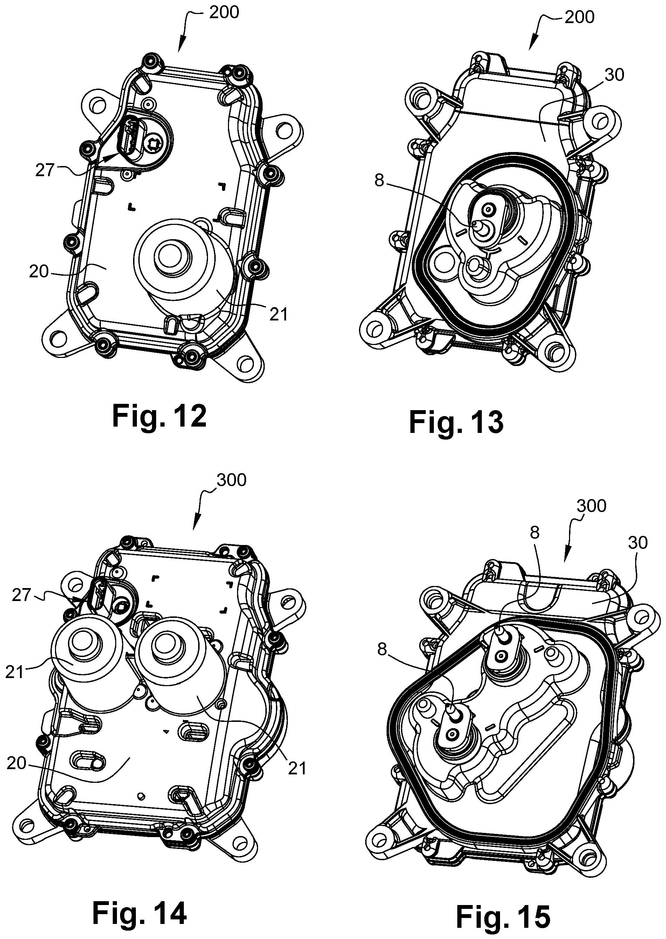

Les Figures 12 à 15 montrent deux autres variantes de réalisation de l'actionneur 10. Sur les Figures 12 et 13 est visible un actionneur 200 dans lequel il n'y a qu'un seul moteur électrique associé à un pion 8 via un mécanisme de démultiplication. Sur les Figures 14 et 15 est visible un actionneur 300 dans lequel il y a deux moteurs électriques associés à deux pions 8 via deux mécanismes de démultiplication. Le fonctionnement des actionneurs 200, 300 est similaire au fonctionnement de l'actionneur 10, seul le nombre de moteur électrique, de mécanisme de démultiplication et de pion diffère selon les modes de réalisations.

Un tel actionneur électrique 10, 100, 200, 300 présente une structure compacte et un faible encombrement. Par ailleurs, il est possible d'utiliser de nombreux éléments standards du commerce, tels que des moteurs électriques et des roues dentées. Le coût d'un tel actionneur électrique est par ailleurs relativement faible et peut être intégré aisément sur les systèmes de transmission existants.

Bien que l'invention ait été décrite en liaison avec plusieurs modes de réalisations, il est bien évident qu'elle n'y est nullement limitée et qu'elle comprend les moyens décrits ainsi que leurs combinaisons si celles-ci entrent dans le cadre de l'invention comme définie dans les revendications.

Dans les revendications, tout signe de référence entre parenthèses ne saurait être interprété comme une limitation de la revendication.

## Revendications

1. Actionneur (10, 100, 200, 300) pour l'actionnement d'au moins un organe mobile d'une transmission de véhicule automobile, ledit actionneur comprenant un boitier (20) et un couvercle (30) définissant un volume interne dans lequel sont logés au moins un moteur électrique (1) ayant un stator (2) et un rotor (3) monté sur un arbre de rotor (4) s'étendant selon un axe X1, un pignon moteur (5) fixé à l'extrémité de l'arbre (4) opposée au rotor (3), une carte électronique (11) pour l'alimentation du stator (2) et le pilotage du moteur électrique (1), un mécanisme de démultiplication (40) entrainé par le pignon moteur (5), **caractérisé en ce que** le boitier (20) ou le couvercle (30) comprend un connecteur électrique (27) qui intègre une membrane semi-perméable (53) permettant un échange gazeux entre l'intérieur de l'actionneur et l'environnement extérieur.

2. Actionneur selon la revendication 1, **caractérisé en ce que** le boitier (20) et le couvercle (30) sont réalisés en métal, de préférence en aluminium.

3. Actionneur selon l'une des revendications 1 ou 2, **caractérisé en ce que** connecteur électrique (27) est réalisé en plastique.

4. Actionneur selon l'une des revendications précédentes, **caractérisé en ce que** la membrane (53) est clippé sur le connecteur électrique (27) par l'intermédiaire d'une bague.

5. Actionneur selon l'une des revendications 1 à 3, **caractérisé en ce que** la membrane (53) est collée ou soudée sur le connecteur électrique (27).

6. Actionneur selon l'une des revendications précédentes, **caractérisé en ce qu'**un joint (54) est positionné entre le connecteur électrique (27) et le boitier (20) ou le couvercle (30), de préférence un joint torique.

7. Actionneur selon l'une des revendications précédentes, **caractérisé en ce que** le connecteur électrique (27) est vissé ou clippé sur le boitier (20) ou le couvercle (30).

8. Actionneur selon l'une des revendications précédentes, **caractérisé en ce que** le boitier (20) et le couvercle (30) présentent chacun des moyens de guidage (24, 28, 32) du mécanisme de démultiplication (40).

9. Actionneur selon l'une des revendications précédentes, **caractérisé en ce que** le boitier (20) comprend une gorge périphérique (25) dans laquelle un joint d'étanchéité (26) est disposé afin d'assurer une étanchéité entre le boitier (20) et le couvercle (30).

10. Actionneur selon l'une des revendications précédentes, **caractérisé en ce qu'**il est apte à être fixé directement sur la transmission du véhicule et **en ce que** la surface externe du couvercle (30) présente une gorge (33) dans laquelle est positionnée un joint d'étanchéité (34) afin d'assurer l'étanchéité entre la transmission et le couvercle (30) de l'actionneur.

11. Actionneur selon l'une des revendications précédentes, **caractérisé en ce qu'**il comprend au moins un pion (8) apte à être engagé dans l'organe mobile de la transmission.

12. Actionneur selon la revendication 11, **caractérisé en ce que** le mécanisme de démultiplication (40) comprend au moins une roue dentée (43, 46) montée sur au moins un arbre (44, 45) et est situé cinématiquement entre le pignon moteur (5) et le pion (8).

13. Actionneur selon la revendication 12, **caractérisé en ce que** le mécanisme de démultiplication (40) comprend une roue à pignons étagés (41, 42, 43) et un pignon à secteur denté (46).

14. Actionneur selon l'une des revendications précédentes, **caractérisé en ce qu'**il est configuré pour le changement de rapports d'une transmission de véhicule automobile, notamment une transmission de véhicule hybride.

## Patentansprüche

1. Stellglied (10, 100, 200, 300) zum Stellen mindestens eines beweglichen Organs eines Kraftfahrzeuggetriebes, wobei das Stellglied ein Gehäuse (20) und einen Deckel (30) umfasst, die ein Innenvolumen definieren, in dem mindestens ein Elektromotor (1), enthaltend einen Stator (2), und ein auf einer Rotorwelle (4) montierter Rotor (3), der sich entlang einer Achse X1 erstreckt, ein Motorritzel (5), das am Ende der Welle (4) gegenüber dem Rotor (3) befestigt ist, eine elektronische Karte (11) zur Versorgung des Stators (2) und zur Steuerung des Elektromotors (1), ein von dem Motorritzel (5) angetriebener Übersetzungsmechanismus (40) angeordnet sind, **dadurch gekennzeichnet, dass** das Gehäuse (20) oder der Deckel (30) einen elektrischen Verbinder (27) umfasst, der eine semipermeable Membran (53) einschließt, die einen Gasaustausch zwischen dem Inneren des Stellglieds und der äußeren Umgebung ermöglicht.

2. Stellglied nach Anspruch 1, **dadurch gekennzeichnet, dass** das Gehäuse (20) und der Deckel (30) aus Metall, vorzugsweise aus Aluminium, bestehen.

3. Stellglied nach einem der Ansprüche 1 oder 2, **dadurch gekennzeichnet, dass** der elektrische Verbinder (27) aus Kunststoff besteht.

4. Stellglied nach einem der vorhergehenden Ansprüche, **dadurch gekennzeichnet, dass** die Membran (53) über einen Ring auf dem elektrischen Verbinder (27) aufgeklipst ist.

5. Stellglied nach einem der Ansprüche 1 bis 3, **dadurch gekennzeichnet, dass** die Membran (53) auf den elektrischen Verbinder (27) geklebt oder geschweißt ist.

6. Stellglied nach einem der vorhergehenden Ansprüche, **dadurch gekennzeichnet, dass** zwischen dem elektrischen Verbinder(27) und dem Gehäuse (20) oder dem Deckel (30) eine Dichtung (54), vorzugsweise ein O-Ring, positioniert ist.

7. Stellglied nach einem der vorhergehenden Ansprüche, **dadurch gekennzeichnet, dass** der elektrische Verbinder (27) mit dem Gehäuse (20) oder dem Deckel (30) verschraubt oder verklipst ist.

8. Stellglied nach einem der vorhergehenden Ansprüche, **dadurch gekennzeichnet, dass** das Gehäuse (20) und der Deckel (30) jeweils Mittel zum Führen (24, 28, 32) des Übersetzungsmechanismus (40) aufweisen.

9. Stellglied nach einem der vorhergehenden Ansprüche, **dadurch gekennzeichnet, dass** das Gehäuse (20) eine Umfangsnut (25) umfasst, in der eine Dichtung (26) eingerichtet ist, um eine Abdichtung zwischen dem Gehäuse (20) und dem Deckel (30) sicherzustellen.

10. Stellglied nach einem der vorhergehenden Ansprüche, **dadurch gekennzeichnet, dass** es dazu fähig ist, direkt an dem Getriebe des Fahrzeugs befestigt zu werden, und dass die Außenoberfläche des Deckels (30) eine Nut (33) aufweist, in der eine Dichtung (34) positioniert ist, um die Dichtheit zwischen dem Getriebe und dem Deckel (30) des Stellglieds sicherzustellen.

11. Stellglied nach einem der vorhergehenden Ansprüche, **dadurch gekennzeichnet, dass** es mindestens einen Stift (8) umfasst, der dazu fähig ist, in das bewegliche Organ des Getriebes einzugreifen.

12. Stellglied nach Anspruch 11, **dadurch gekennzeichnet, dass** der Übersetzungsmechanismus (40) mindestens ein Zahnrad (43, 46), das auf mindestens einer Welle (44, 45) montiert ist, umfasst und sich kinematisch zwischen dem Motorritzel (5) und dem Stift (8) befindet.

13. Stellglied nach Anspruch 12, **dadurch gekennzeichnet, dass** der Übersetzungsmechanismus (40) ein Rad mit gestuften Ritzeln (41, 42, 43) und ein Ritzel mit Zahnsegment (46) umfasst.

14. Stellglied nach einem der vorhergehenden Ansprüche, **dadurch gekennzeichnet, dass** es für den Gangwechsel eines Kraftfahrzeuggetriebes, insbesondere eines Hybridfahrzeuggetriebes, konfiguriert ist.

## Claims

1. Actuator (10, 100, 200, 300) for the actuation of at least one movable member of a motor vehicle transmission, said actuator comprising a housing (20) and a cover (30) defining an internal volume in which are received at least one electric motor (1) having a stator (2) and a rotor (3) mounted on a rotor shaft (4) extending along an axis X1, a motor pinion (5) fixed to the opposite end of the shaft (4) to the rotor (3), a circuit board (11) for supplying power to the stator (2) and for controlling the electric motor (1), a step-down mechanism (40) driven by the motor pinion (5), **characterized in that** the housing (20) or the cover (30) comprises an electrical connector (27) which incorporates a semipermeable membrane (53) allowing an exchange of gas between the inside of the actuator and the external surroundings.

2. Actuator according to Claim 1, **characterized in that** the housing (20) and the cover (30) are made of metal, preferably of aluminium.

3. Actuator according to either of Claims 1 and 2, **characterized in that** the electrical connector (27) is made of plastic.

4. Actuator according to one of the preceding claims, **characterized in that** the membrane (53) is clipped on the electrical connector (27) by way of a ring.

5. Actuator according to one of Claims 1 to 3, **characterized in that** the membrane (53) is adhesively bonded or welded on the electrical connector (27).

6. Actuator according to one of the preceding claims, **characterized in that** a seal (54) is positioned between the electrical connector (27) and the housing (20) or the cover (30), preferably an O-ring.

7. Actuator according to one of the preceding claims, **characterized in that** the electrical connector (27) is screwed or clipped on the housing (20) or the cover (30).

8. Actuator according to one of the preceding claims, **characterized in that** the housing (20) and the cover (30) each have guide means (24, 28, 32) for guiding the step-down mechanism (40).

9. Actuator according to one of the preceding claims, **characterized in that** the housing (20) comprises a peripheral groove (25) in which a seal (26) is disposed in order to ensure leaktightness between the housing (20) and the cover (30).

10. Actuator according to one of the preceding claims, **characterized in that** it is able to be fixed directly on the transmission of the vehicle and **in that** the outer surface of the cover (30) has a groove (33) in which a seal (34) is positioned in order to ensure leaktightness between the transmission and the cover (30) of the actuator.

11. Actuator according to one of the preceding claims, **characterized in that** it comprises at least one pin (8) able to be engaged in the movable member of the transmission.

12. Actuator according to Claim 11, **characterized in that** the step-down mechanism (40) comprises at least one gear wheel (43, 46) mounted on at least one shaft (44, 45) and is located kinematically between the motor pinion (5) and the pin (8).

13. Actuator according to Claim 12, **characterized in that** the step-down mechanism (40) comprises a stepped-pinion wheel (41, 42, 43) and a toothed-sector pinion (46).

14. Actuator according to one of the preceding claims, **characterized in that** it is configured to change gear ratios in a motor vehicle transmission, in particular a hybrid vehicle transmission.
